# EUROPEAN PATENT APPLICATION

(11) **EP 1 571 854 A1**
(43) Date of publication of application: **07.09.2005**
(21) Application number: 03811878.2
(22) Date of filing: 24.09.2003
(51) Int. Cl.: H04N 13/00, H04N 7/08

(54) **STEREOSCOPIC VIDEO PROVIDING METHOD AND STEREOSCOPIC VIDEO DISPLAY**

(30) Priority: 25.11.2002 JP 2002340245
(71) Applicant: SANYO ELECTRIC CO., LTD., Osaka-fu 570-8677 (JP)
(72) Inventor: MASHITANI, Ken, Neyagawa-shi, Osaka 572-0839 (JP); HAMAGISHI, Goro, Toyonaka-shi, Osaka 561-0802 (JP); ANDO, Takahisa, Ikoma-shi, Nara 630-0121 (JP); TAKEMOTO, Satoshi, Takatsuki-shi, Osaka 569-1026 (JP)
(74) Representative: Read, Matthew Charles
(86) International application number: PCT/JP2003/012177
(87) International publication number: WO 2004/049735

(57) **Abstract**

A transmitting-side performs an image analysis on a photographed two-dimensional image (100) and extracts a background image (101), an image (102) of a building, and an image (103) of an automobile. These extracted images are handled as objects. Moreover, a depth map is generated by applying a depth value to each dot. In addition, thickness information is applied. The thickness information may be applied to each dot or to each object.

## Description

### TECHNICAL FIELD

The present invention relates to a stereoscopic vision-use image providing method and a stereoscopic image display device.

### PRIOR ART

As a prior art, there is proposed a stereoscopic image receiver and a stereoscopic image system that generate a stereoscopic image on the basis of depth information extracted from a two-dimensional video signal and the two-dimensional video signal (see Japanese Patent Laying-open No.2000-78611).

With the above-described prior art, it is possible to generate a stereoscopic vision-use image that is allowed to have parallax information from an actually photographed two-dimensional image. Herein, for example, in a case that a house exists as an object in the two-dimensional image and this image is combined with an image in which a ball is rolling, if the ball comes to a position where the ball hits the house from a lateral direction, the ball is to be so displayed as to hit the house and bounce off. In the above-mentioned prior art, a surface position of the object is merely defined by depth information, and it is impossible to determine a collision between the ball and the object. Accordingly, the ball is so displayed as to pass through in front of the house, or as to pass behind the house.

### SUMMARY OF THE INVENTION

In view of the foregoing circumstances, it is an object of the present invention to provide a stereoscopic vision-use image providing method and a stereoscopic image display device that allow various stereoscopic displays by adding further information regarding an object, and so on.

In order to solve the above-mentioned problem, the stereoscopic vision-use image providing method of the present invention is characterized in providing, when providing the two-dimensional image as data, stereoscopic vision-use information useful for converting the data of the two-dimensional image into a stereoscopic vision-use image and thickness information of an object on the two-dimensional image, as additional information of the two-dimensional image together with the data of the two-dimensional image.

With the above-described configuration, by thickness information of an object on a two-dimensional image, it is possible to handle the object as the object having thickness also on a stereoscopic vision-use image. As a result, it is possible to utilize the information, in a case of composing the stereoscopic vision-use image with an alternate image, for example, for determining a collision between the object on the stereoscopic vision-use image and the alternate image (or between the object on the stereoscopic vision-use image and an object on the alternate image), and so on.

Moreover, the stereoscopic vision-use image providing method of the present invention is characterized in providing, when providing a two-dimensional image as data, stereoscopic vision-use information useful for converting the data of the two-dimensional image into a stereoscopic vision-use image such as depth information indicating a near side position of an object on the two-dimensional image and depth information indicating a far side position of the object on the two-dimensional image, as additional information of the two-dimensional image together with the data of the two-dimensional image.

Also with such the configuration, by depth information indicating a near side position of an object on a two-dimensional image and depth information indicating a far side position of the object on the two-dimensional image, it is possible to handle the object as an object having thickness also on the stereoscopic vision-use image.

Moreover, the stereoscopic vision-use image providing method of the present invention is characterized in providing, when providing a two-dimensional image as data, stereoscopic vision-use information useful for converting the data of the two-dimensional image into a stereoscopic vision-use image and thickness information of each dot on the two-dimensional image as additional information of the two-dimensional image together with the data of the two-dimensional image.

With the above-described configuration, by thickness information of each dot on the two-dimensional image, it is possible to handle each dot as a dot having thickness also on the stereoscopic vision-use image. As a result, it is possible to utilize the information, in a case of composing the stereoscopic vision-use image with an alternate image, for example, for determining a collision between a displayed object on the stereoscopic vision-use image and a displayed object on the alternate image, and so on.

Furthermore, the stereoscopic vision-use image providing method of the present invention is characterized in providing, when providing a two-dimensional image as data, stereoscopic vision-use information useful for converting the data of the two-dimensional image into a stereoscopic vision-use image such as depth information indicating a near side of each dot on the two-dimensional image and depth information indicating a far side of the each dot on the two-dimensional image, as additional information of the two-dimensional data together with the data of the two-dimensional image.

Also with such the configuration, by depth information indicating a near side position of each dot on the two-dimensional image and depth information indicating a far side position of each dot on the two-dimensional image, it is possible to handle each dot as the dot having thickness.

In these stereoscopic vision-use image providing methods, information may be provided by any one of methods such as broadcasting, a communication, and a recording into a recording medium. In addition, at least one photographing time information out of focal distance information and field angle information may be provided as additional information of the two-dimensional image together with the data of the two dimensional image.

Moreover, a stereoscopic vision-use image providing method of the present invention is a stereoscopic vision-use image providing method that provides multi-viewpoint two-dimensional images as data, and is characterized in providing at least one photographing time information out of information indicating intervals between viewpoints, information indicating an angle formed of adjoining viewpoints and an object to be photographed, information indicating a cross location of optical axes, focal distance information, and field angle information as additional information of the two-dimensional image together with the data of the two-dimensional image.

With the above-described configuration, it is possible that a display device utilizes the photographing time information provided as additional information of the two-dimensional image, and the device selects a viewpoint depending on a position of an object to be photographed, for example. In addition, in a case that the multi-viewpoint is obtained by photographing an object to be photographed by cameras arranged in a circular shape around the object to be photographed, it becomes easy to incorporate a stereoscopic image of the object to be photographed into a three-dimensional data and handle the stereoscopic image.

Furthermore, a stereoscopic image display device comprises a means for generating data of a stereoscopic vision-use image on the basis of data of a two-dimensional image and stereoscopic vision-use information, a means for composing an alternate image with the stereoscopic vision-use image on the basis of data of the alternate image, and a means for determining a collision between a displayed object on the stereoscopic vision-use image and a displayed object on the alternate image on the basis of thickness information of dots or an object on the two-dimensional image that are additional information of the two dimensional image.

With the above-described configuration, thickness information of an object on a two-dimensional image allows the object to be handled as the object having thickness also on the stereoscopic vision-use image, and in composing with an alternate image, a determination of collision is performed, so that it is possible to perform a process according to the determination of the collision.

Moreover, a stereoscopic image display device of the present invention comprises a means for generating data of a stereoscopic vision-use image on the basis of data of a two-dimensional image and depth information indicating a near side position of an object on the two-dimensional image, and a means for generating thickness information of the object on the basis of depth information indicating a far side position of the object and the depth information indicating the near side position of the object.

Furthermore, a stereoscopic image display of the present invention comprises a means for generating data of a stereoscopic vision-use image on the basis of data of a two-dimensional image and depth information indicating a near side position of each dot on the two-dimensional image, and a means for generating thickness information on the basis of depth information indicating a far side position of the each dot and the depth information indicating the near side position of the each dot.

In addition, a stereoscopic image display of the present invention is a stereoscopic image display that performs a stereoscopic image display using two images out of multi-viewpoint images, and is characterized in selecting the two images on the basis of at least one photographing time information out of viewpoint intervals information, information indicating an angle formed of adjoining viewpoints and an object to be photographed, information indicating a cross location of optical axes, focal distance information, and field angle information.

With the above-mentioned configuration, it is possible to select the two images on the basis of the photographing time information provided as additional information of the two-dimensional image. For example, in a case that the object to be photographed is in a position close to an observer, two images are selected so that intervals between viewpoints are large. In a case that the object to be photographed is in a position far from the observer, two images are selected so that intervals between viewpoints are small.

### BRIEF DESCRIPTION OF THE DRAWINGS

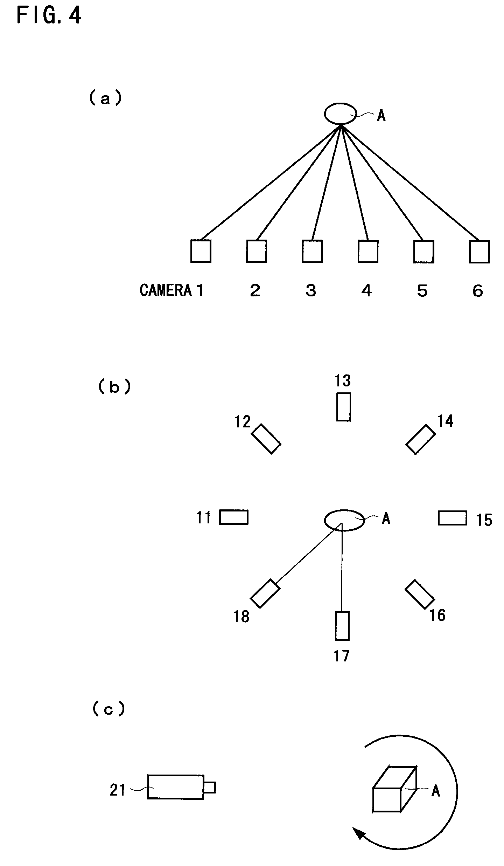

Figure 1(a), (b), and (c) are descriptive diagrams showing a stereoscopic vision-use image providing method of an embodiment of the present invention;
Figure 2 (a) and (b) are descriptive diagrams illustrating a transmission format of a stereoscopic vision-use image;
Figure 3 is a descriptive diagram showing a collision determination;
Figure 3(a) shows an image;
Figure 3(b) shows a case that there is thickness information;

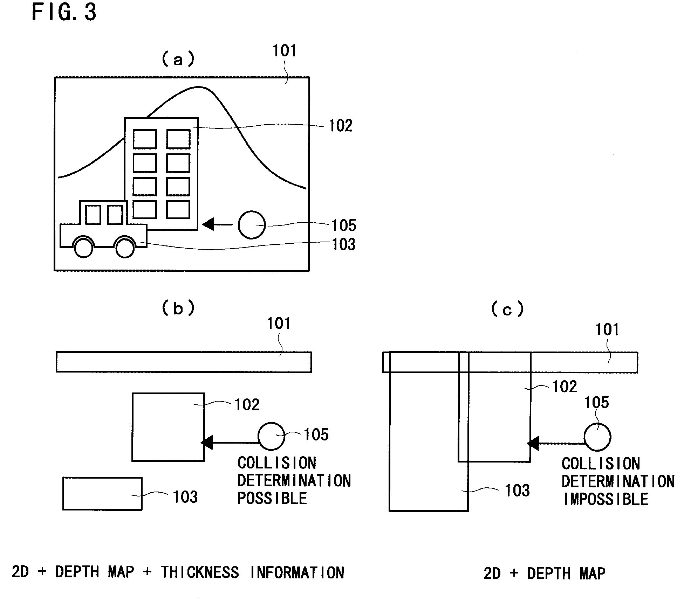

Figure 3(b) shows a case that there is no thickness information;
Each of Figure 4(a), (b) and (c) is a descriptive diagram showing an obtainment of multi-viewpoint images (multi-eye images); and

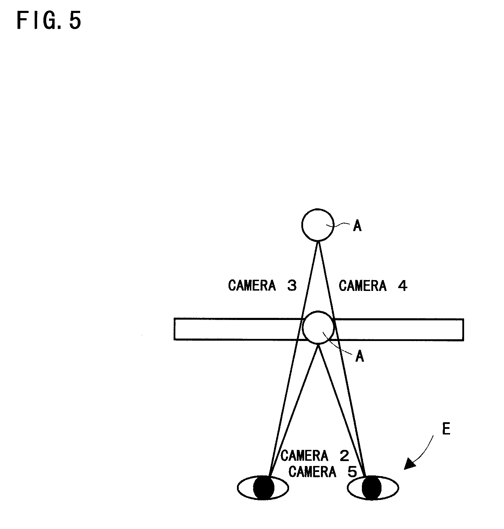

Figure 5 is a descriptive diagram showing a selective form of two images.

### BEST MODE FOR PRACTICING THE INVENTION

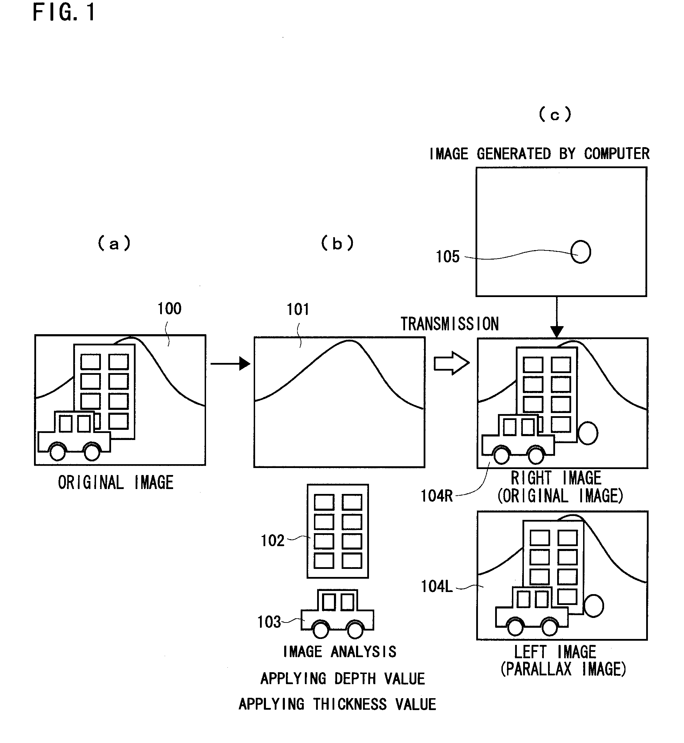

Hereinafter, a stereoscopic vision-use image providing method and a stereoscopic image display device will be described referring to Figures 1 to 5.

At first, on the basis of Figure 1, a generation of a stereoscopic image by a two-dimensional image and a stereoscopic vision-use information (here, depth information is used as the stereoscopic vision-use image), and a determination of a collision based on thickness information of an object on the two-dimensional image and a composite image will be described. It is noted that, in this Figure, a system will be described as the system that is formed of a transmitting-side structured as a broadcasting station, a server on the Internet, or the like, and a receiving-side formed of a broadcasting receiver, a personal computer provided with the Internet access environment, or the like.

Figure 1(a) shows an actually photographed two-dimensional image 100. On the transmitting-side, an image analysis is performed on the two-dimensional image 100, and as shown in Figure 1(b), a background image 101, an image 102 of a building, and an image 103 of an automobile are extracted. These extracted images are handled as objects (for example, edge information). Moreover, a depth value is applied for each dot and the depth map is generated. It is noted that it is also possible to apply the depth value to each object. The depth value may be applied automatically (presumptively), or may be applied by a manual procedure.

Furthermore, the thickness information is applied. The thickness information may be applied to each dot or each object. In a case that a thickness of an object is almost fixed (for example, in a case that an object is a box-shaped building photographed from a front side, and the like), it is permissible to apply the thickness information to each object. Moreover, two depth maps may be applied. As a result of one depth map being depth information indicating a near side position and the other depth map being depth information indicating a far side position, the thickness is found by the difference between the near side position and the far side position. In addition, in the case that two depth maps are applied, the depth information may be changed over such that the depth information indicating the near side position and the depth information indicating the far side position change alternately, for example, in a case of the two dimensional image of a moving picture, depth information indicating the near side position is applied to the two-dimensional image of a certain frame and depth information indicating the far side position is applied to the two dimensional image of the next frame.

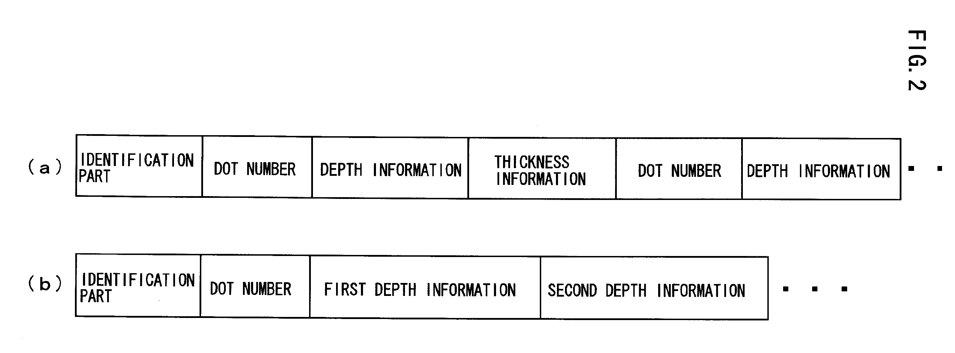

Thus, the transmitting-side, when providing the two-dimensional image as data, transmits the depth map and the thickness information as additional information of the two-dimensional image together with the two-dimensional image data. In transmission, a process for compressing the data and a process for multiplexing are performed. One example of a format for inserting the thickness information is shown in Figure 2 (a). In this format, a property of the information is indicated in an "identification part", and in this case, the information indicates the depth information and the thickness information. A "dot number" specifies each dot. The "depth information" is a depth value of a dot indicated by the dot number. The "thickness information" is the thickness information of a dot of the dot number.

Or, the transmitting-side, when providing the two-dimensional image as data, provides the depth map indicating the near side position and the depth map indicating the far side position as additional information of the two-dimensional image together with the two-dimensional image data. One example of a format in this case is shown in Figure 2(b). In this format, the property of information is indicated in the "identification part", and in this case, the information indicates the depth information. The "dot number" specifies each dot. "First depth information" is a depth value of the near side of the dot indicated by the dot number. "Second depth information" is a depth value of the far side of the dot indicated by the dot number.

As shown in Figure 1(c), the receiving-side receives each of the data including the background image 101, the image 102 of the building, and the image 103 of the automobile, and the additional information. If these data are multiplexed, a demultiplexing process is performed. As a decoding process toward each data, basically, the process based on MPEG 4, or the like, is adopted, for example. In addition, the receiving-side generates images 104R for a right eye and 104L for a left eye to which a parallax is applied based on each of the data including the background image 101, the image 102 of the building, and the image 103 of the automobile, the depth map and a composition-use image (for example, a three-dimensional image of a ball 105 generated by a computer). Accordingly, the receiving-side is provided with a means (a modem, a tuner, etc.) for receiving data, a demultiplexer, a decoder, a stereoscopic image data generating part for generating the stereoscopic vision-use image data based on the two-dimensional image data and the stereoscopic vision-use information, and an image composition processing part for composing an alternate image with the stereoscopic vision-use image based on data of the alternate image. In addition, in this embodiment, the receiving-side is provided with a collision determining part for determining a collision between a displayed object on the stereoscopic vision-use image and a displayed object on the alternate image.

In the collision determining part, the following process is performed. Here, in order to simplify the description, as shown in Figure 3(a), it is assumed that the depth value of the background image 101 is 100, the depth value and the thickness value of the image 102 of the building are 50 and 30, respectively, the depth value and the thickness value of the image 103 of the automobile are 30 and 10, respectively, the depth value and the thickness value of the ball 105 as the composition-use image are 55 and 1, respectively. On the basis of such the information, as shown in Figure 3(b), it is possible to judge that the ball 105 is located on a coordinate at a rear side of the image 103 of the automobile and on a coordinate between a surface side and a rear side of the image 102 of the building. Furthermore, the case that only the conventional depth value is applied is shown in Figure 3(c) for reference. As understood from these Figures, with an embodiment of the present invention, when dots that form a moving end of the rolling ball 105 are located on the dots that form a side surface of the image 102 of the building, it is determined that the ball 105 collided against the image 102 of the building. This determination result is applied to the aforementioned computer, and the computer generates a three-dimensional image of the ball 105 in which a moving course of the ball 105 is reversed (bounced off). It is noted that, in the case that only the depth value is applied, an image in which the ball 105 passes at the rear side of the image 102 of the building is generated.

Next, an obtainment of multi-viewpoint images (multi-eye images) will be described. Figure 4(a) shows a state at the time of obtaining the multi-viewpoint images (actually photographed). In this Figure, an object A to be photographed (object) is photographed by a camera 1, a camera 2, a camera 3, a camera 4, a camera 5, and a camera 6, so that it is possible to obtain the two-dimensional image with six viewpoints. Then, in transmitting this two-dimensional image with six viewpoints as data, at least one photographing time information out of information indicating intervals between viewpoints (intervals of cameras), information indicating a cross location of optical axes, focal distance information (distance to an object), and field angle information are transmitted as additional information of the two-dimensional image together with the two-dimensional image data. Figure 4(b) shows another example of the time of obtainment of the multi-viewpoint images (actually photographed). In this example, by arranging a camera 11, a camera 12, a camera 13, a camera 14, a camera 15, a camera 16, a camera 17 and a camera 18 circularly around the object A, and photographing the object, the multiple-viewpoint two-dimensional image is obtained. In this case, instead of the information indicating the intervals between the viewpoints, information indicating an angle formed between the adjoining viewpoints (cameras) and the object A to be photographed is obtained. Moreover, as shown in Figure 4(c), also by photographing the object A to be photographed using one camera while rotating the object, it is possible to obtain the multi-viewpoint two-dimensional image. At this time, a rotation speed may be included in the photographing time information. As a result of the photographing time information being applied together with the multiple-viewpoint two dimensional image obtained by the methods shown in Figures 4(b), 4(c), it is possible to apply a three-dimensional coordinate value to each point (each dot of displayed image) that form a surface of the object A to be photographed. Accordingly, it becomes easy to incorporate the object A to be photographed (actually photographed) into three-dimensional data and handle the obj ect (it becomes easy to arrange an actually photographed image in the three-dimensional data). In this case, it is preferable to render a background black (a black curtain is arranged on the background) and to photograph so as to take out one object.

A stereoscopic image display device to which the multi-viewpoint two dimensional data and the photographing time information are applied performs a stereoscopic image display by using two images out of the multi-viewpoint images. As the stereoscopic image display method using two images, there are such methods as to display two images alternately in terms of time and see the images with shutter eyeglasses, display two images alternately in terms of space and see the images by separating the images using a parallax barrier, and others. It is possible that the stereoscopic image display determines the front and rear position (far or close) of the displayed object by the focal distance information (distance to the object) within the photographing time information. Moreover, as shown in Figure 5 (Figure 5 is a diagram corresponding to Figure 4(a)), when the object A is close to a observer E, the images of the cameras 2 and 5 are selected, and when the object A is far from the observer E, the images of the cameras 3 and 4 are selected.

As described above, the present invention has an effect to render various stereoscopic image displays possible.

## Claims

1. The stereoscopic vision-use image providing method
**characterized in** providing, when providing a two-dimensional image as data, stereoscopic vision-use information useful for converting the data of said two-dimensional image into a stereoscopic vision-use image and thickness information of an object on said two-dimensional image, as additional information of said two-dimensional image together with the data of said two-dimensional image.

2. The stereoscopic vision-use image providing method
**characterized in** providing, when providing a two-dimensional image as data, stereoscopic vision-use information useful for converting the data of said two-dimensional image into a stereoscopic vision-use image such as depth information indicating a near side position of an object on said two-dimensional image and depth information indicating a far side position of the object on said two-dimensional image, as additional information of said two-dimensional image together with the data of said two-dimensional image.

3. The stereoscopic vision-use image providing method
**characterized in** providing, when providing a two-dimensional image as data, stereoscopic vision-use information useful for converting the data of said two-dimensional image into a stereoscopic vision-use image and thickness information of each dot on said two-dimensional image, as additional information of said two-dimensional image together with the data of said two-dimensional image.

4. The stereoscopic vision-use image providing method
**characterized in** providing, when providing a two-dimensional image as data, stereoscopic vision-use information useful for converting the data of said two-dimensional image into a stereoscopic vision-use image such as depth information indicating a near side of each dot on said two-dimensional image and depth information indicating a far side of each dot on said two-dimensional image, as additional information of said two-dimensional data together with the data of said two-dimensional image.

5. A stereoscopic vision-use image providing method according to any one of claims 1 to 4, **characterized in** providing information by any one of methods such as broadcasting, a communication, and a recording into a recording medium.

6. A stereoscopic vision-use image providing method according to any one of claims 1 to 5, **characterized in** providing at least one photographing time information out of focal distance information and field angle information, as additional information of said two-dimensional image together with the data of said two dimensional image.

7. A stereoscopic vision-use image providing method that provides multi-viewpoint two-dimensional images as data, **characterized in** providing at least one photographing time information out of information indicating the intervals between viewpoints, information indicating an angle formed of adjoining viewpoints and an object to be photographed, information indicating a cross location of optical axes, focal distance information, and field angle information, as additional information of the two-dimensional image together with the data of said two-dimensional image.

8. A stereoscopic image display device, comprising:
a means for generating data of a stereoscopic vision-use image on the basis of data of a two-dimensional image and stereoscopic vision-use information;
a means for composing an alternate image with said stereoscopic vision-use image on the basis of data of said alternate image; and
a means for determining a collision between a displayed object on the stereoscopic vision-use image and a displayed object on said alternate image on the basis of thickness information of dots and an object on said two-dimensional image that are additional information of said two dimensional image.

9. A stereoscopic image display device, comprising:
a means for generating data of a stereoscopic vision-use image on the basis of data of a two-dimensional image and depth information indicating a near side of an object on said two-dimensional image; and
a means for generating thickness information of the object on the basis of depth information indicating a far side position of said object and said depth information indicating the near side position of the object.

10. A stereoscopic image display, comprising:
a means for generating data of a stereoscopic vision-use image on the basis of data of a two-dimensional image and depth information indicating a near side position of each dot on said two-dimensional image; and
a means for generating thickness information of each dot on the basis of depth information indicating a far side position of said each dot and said depth information indicating the near side position of said each dot.

11. A stereoscopic image display that performs a stereoscopic image display using two images out of multi-viewpoint images,
**characterized in** selecting said two images on the basis of at least one photographing time information out of information indicating intervals between viewpoints, information indicating an angle formed of adjoining viewpoints and an object to be photographed, information indicating a cross location of optical axes, focal distance information, and field angle information.
